# EUROPÄISCHE PATENTSCHRIFT

(11) **EP 3 275 353 B1**
(45) Veröffentlichungstag und Bekanntmachung des Hinweises auf die Patenterteilung: **24.07.2019**
(21) Anmeldenummer: 17177987.9
(22) Anmeldetag: 27.06.2017
(51) Int. Cl.: A47J 42/50, A47J 31/42, B65D 71/50, B65D 83/06

(54) **VORRATSBEHÄLTERANORDNUNG FÜR EIN GETRÄNKEZUBEREITUNGSGERÄT**
STORAGE CONTAINER ASSEMBLY FOR A BEVERAGE PREPARATION DEVICE
SYSTÈME DE RÉCIPIENT DE STOCKAGE POUR UN APPAREIL DE PRÉPARATION DE BOISSONS

(30) Priorität: 26.07.2016 DE 102016213642
(43) Veröffentlichungstag der Anmeldung: 31.01.2018
(73) Patentinhaber: FRANKE Kaffeemaschinen AG, 4663 Aarburg (CH)
(72) Erfinder:
(74) Vertreter: Lemcke, Brommer & Partner Patentanwälte Partnerschaft mbB

(56) Entgegenhaltungen:
- EP-A1- 1 622 492
- EP-A1- 2 878 240
- US-B1- 8 146 758

## Beschreibung

Die vorliegende Erfindung betrifft eine Vorratsbehälteranordnung für ein Getränkezubereitungsgerät, zur Bevorratung und Zufuhr von einem oder mehreren festen Ausgangsstoffen für die Zubereitung von heißen oder kalten Getränken.

Getränkezubereitungsgeräte, die zur automatisierten Zubereitung von heißen oder kalten Getränken dienen, sind mit Vorratsbehältern ausgestattet, in denen die Ausgangsstoffe für die Zubereitung gelagert und dem Zubereitungsgerät bei Bedarf zugeführt werden. Die Zufuhr aus einem derartigen Vorratsbehälter erfolgt hierbei in der Regel unter Schwerkraftwirkung, das heißt die Vorratsbehälter sind oberhalb bzw. in einem oberen Bereich des jeweiligen Zubereitungsgeräts angeordnet. Insbesondere auf dem Gebiet von Kaffeevollautomaten sind Bohnenbehälter bekannt, die oberhalb des Kaffeevollautomaten angeordnet sind und die Bohnen bei entsprechender Aktivierung automatisch in ein darunter befindliches Mahlwerk und von dort in ein Brühsystem geführt werden. Daneben können weitere Vorratsbehälter für andere Zusatzstoffe wie beispielsweise Schokoladenpulver vorgesehen sein.

Da derartige Getränkezubereitungsgeräte häufig vergleichsweise groß sind und in Arbeitshöhe auf einer Theke oder dergleichen aufgestellt werden, kann es insbesondere für weniger groß gewachsene Bedienpersonen schwierig sein, die oberhalb des Gerätes angeordneten Vorratsbehälter zu befüllen.

Es ist daher eine Aufgabe der vorliegenden Erfindung, ein hinsichtlich Bedienbarkeit und Ergonomie verbessertes Getränkezubereitungsgerät anzugeben und insbesondere eine Vorratsbehälteranordnung zu schaffen, bei welcher das Befüllen mit festen Ausgangsstoffen für die Getränkezubereitung vereinfacht ist.

Diese und weitere Aufgaben werden gelöst durch die Merkmale des Anspruchs 1. Vorteilhafte Ausgestaltungen sind den abhängigen Ansprüchen zu entnehmen.

Aus der Schrift WO 2004/098361 A1 ist eine Kaffeemühle mit einem abnehmbaren Bohnenbehälter bekannt, der von vorne in eine Schienenführung an der Deckelplatte der Kaffeemühle eingeschoben wird. Hierbei öffnet sich ein Verschlussschieber an der Unterseite des Bohnenbehälters.

Die Schrift US 8,146,758 B1 zeigt eine zweiteilige Babyflasche, deren unterer Flaschenteil abgenommen werden kann. Über einen manuell drehbaren Verschlussschieber kann die Verbindungsöffnung zwischen oberem und unterem Flaschenteil verschlossen werden, sodass keine Flüssigkeit aus dem oberen Flaschenteil auslaufen kann.

Erfindungsgemäß weist eine Vorratsbehälteranordnung für ein Getränkezubereitungsgerät mindestens einen zweiteiligen Vorratsbehälter mit einem unteren Teilbehälter und einem abnehmbaren oberen Teilbehälter auf, der auf dem unteren Teilbehälter anordenbar ist. Der obere Teilbehälter besitzt einen Boden mit einer Verbindungsöffnung, an welcher eine Verschlussvorrichtung angeordnet ist, welche ausgebildet ist, bei einem Zusammenfügen von oberem und unterem Teilbehälter zu öffnen und eine Verbindung zwischen oberem und unterem Teilbehälter freizugeben. Hierzu weist die Verschlussvorrichtung einen Schieber auf, welcher in einer Schließstellung die Verbindungsöffnung verschließt und beim Zusammenfügen von oberem und unterem Teilbehälter von einem am unteren Teilbehälter angeordneten Vorsprung in seine geöffnete Stellung geschoben wird. Auf diese Weise lässt sich ein einfaches und sicheres selbsttätiges Öffnen der Verbindungsöffnung beim Zusammenfügen von oberem und unterem Teilbehälter realisieren.

Auf diese Weise kann zum Befüllen der obere Teilbehälter entfernt, von der Bedienperson befüllt und wieder auf dem unteren Teilbehälter angeordnet werden. Beim Zusammenfügen wird hierbei automatisch die Verbindungsöffnung geöffnet, so dass die eingefüllten Ausgangsstoffe vom oberen Teilbehälter in den unteren Teilbehälter rieseln können. Da der Vorratsbehälter nicht als Ganzes von dem Getränkezubereitungsgerät abgenommen werden braucht, sondern der untere Teilbehälter mit dem darin befindlichen Ausgangsstoff auf dem Gerät verbleibt, ist während des Befüllens, das heißt bei abgenommenem oberen Teilbehälter, weiterhin eine Bedienung des Geräts, bzw. ein Getränkebezug möglich. Das Gerät bleibt also auch während dieses Befüllens voll funktionsfähig.

Bei einer bevorzugten Ausführungsform ist oberhalb des unteren Teilbehälters eine Schienenführung angebracht, in welche der obere Teilbehälter zum Zusammenfügen eingeschoben wird. Auf diese Weise kann der obere Teilbehälter in horizontaler Richtung, vorzugsweise nach vorne oder hinten in Bezug auf das Getränkezubereitungsgerät, in der Art einer Schublade herausgezogen und nach dem Befüllen wieder eingeschoben werden. Dies führt zu einer einfachen und sicheren Bedienbarkeit.

Hierbei ist es insbesondere vorteilhaft, wenn die Schienenführung einen Endanschlag für den oberen Teilbehälter aufweist und auf den unteren Teilbehälter in zwei Montagestellungen montierbar ist, derart, dass der obere Teilbehälter entweder aus einer ersten oder aus einer der ersten entgegengesetzten zweiten Richtung in die Schienenführung einschiebbar ist. Der obere Teilbehälter kann somit bis zum Endanschlag der Schienenführung eingeschoben werden, so dass seine Betriebsposition auf dem unteren Teilbehälter eindeutig definiert ist. Die unterschiedlichen Montagestellungen der Schienenführung ermöglichen hierbei, den Betrieb des Getränkezubereitungsgeräts an seinen Aufstellort anzupassen. Beispielsweise kann zum Betrieb des Getränkezubereitungsgeräts als Thekengerät im Servicebereich eines Gastronomiebetriebs die Schienenführung so angeordnet sein, dass der obere Teilbehälter nach vorne herausgezogen werden kann. Wird dagegen das Getränkezubereitungsgerät im Selbstbedienungsbereich vor einem dahinter befindlichen Servicebereich aufgestellt, so lässt sich die Schienenführung so montieren, dass der obere Teilbehälter (nur) nach hinten herausgezogen werden kann, also vom Servicebereich her befüllbar ist.

Bei einer bevorzugten Ausführungsform ist ein federbelasteter Riegel vorgesehen, der den Schieber in einen geschlossenen Zustand sichert. Der Riegel weist eine schräge Rampe auf, gegen die der Schieber unter Überwindung einer Federkraft verschiebbar ist. Mit einem solchen federbelasteten Riegel kann sichergestellt werden, dass der Schieber bei abgenommenem oberen Teilbehälter nicht versehentlich öffnet und die eingefüllten Ausgangsstoffe verschüttet werden.

Außerdem ist bei der genannten Ausführungsform vorgesehen, dass der Schieber bei einem Abnehmen des oberen Teilbehälters vom unteren Teilbehälter durch eine am unteren Teilbehälter angeordnete Rastnase in seine geschlossene Stellung zurückgeführt wird. Eine solche Rastnase ermöglicht es, dass der Schieber beim Zusammenfügen von oberem und unterem Teilbehälter die Rastnase beiseite drücken und an ihr vorbeigleiten kann, die Rastnase jedoch im zusammengefügten Zustand hinter dem Schieber zum Einrasten kommt und diesen beim Abnehmen des oberen Teilbehälters zurück in die geschlossene Stellung führt. Somit wird verhindert, dass eventuell noch im oberen Teilbehälter befindliche Ausgangstoffe beim Abnehmen des oberen Teilbehälters durch die geöffnete Verbindungsöffnung herausfallen können.

Bei einer Vorratsbehälteranordnung der vorstehend genannten Art ist es außerdem vorteilhaft, den Boden des oberen Teilbehälters als einen zur Verbindungsöffnung hin geneigten Schrägboden auszubilden, vorzugsweise den Boden so auszubilden dass dieser sich zur Verbindungsöffnung hin nach unten trichterförmig verjüngt. Hierdurch wird erreicht, dass in den oberen Teilbehälter eingefüllte Ausgangsstoffe unter Schwerkraftwirkung vollständig in den unteren Teilbehälter entleert werden können.

Die vorliegende Erfindung betrifft des Weiteren ein Getränkezubereitungsgerät, insbesondere Kaffeevollautomat, mit einer Vorratsbehälteranordnung der vorstehend genannten Art.

Bei einer bevorzugten Anwendung der vorliegenden Erfindung dient der mindestens eine zweiteilige Vorratsbehälter der Vorratsbehälteranordnung zur Aufnahme und Zufuhr von Kaffeebohnen für einen Kaffeevollautomaten. Hierzu ist der zweiteilige Vorratsbehälter zur Aufnahme der Kaffeebohnen oberhalb eines Mahlwerks des Kaffeevollautomaten angeordnet, so dass die Kaffeebohnen aus dem Vorratsbehälter direkt in das Mahlwerk hineinfallen.

Weitere Vorteile und Ausgestaltungen der vorliegenden Erfindung ergeben sich aus der nachfolgenden Beschreibung eines Ausführungsbeispiels anhand der Figuren. Hierbei zeigt:
- Fig. 1: eine isometrische Darstellung einer Vorratsbehälteranordnung für einen Kaffeevollautomat,
- Fig. 2: eine Seitenansicht der Vorratsbehälteranordnung aus Fig. 1,
- Fig. 3: eine rückwärtige Ansicht der Vorratsbehälteranordnung aus Fig. 1,
- Fig. 4: eine Seitenansicht des oberen Teilbehälters in einer Explosionszeichnung,
- Fig. 5: eine isometrische Darstellung der Explosionszeichnung aus Fig. 4 und
- Fig. 6: eine isometrische Darstellung eines in Längsrichtung aufgeschnittenen zweiteiligen Vorratsbehälters.

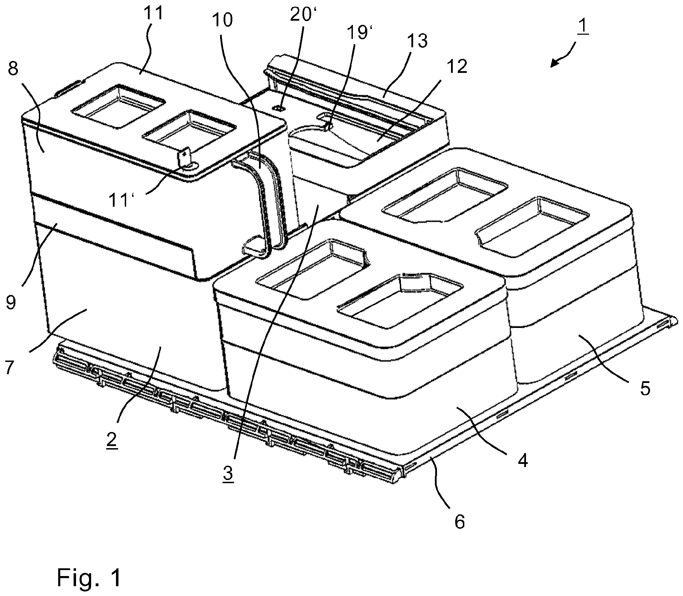

In Fig. 1 ist eine Vorratsbehälteranordnung 1 für einen Kaffeevollautomaten dargestellt. Die Vorratsbehälteranordnung 1 umfasst insgesamt vier Vorratsbehälter 2, 3, 4 und 5, die auf einer gemeinsamen Platte 6 angeordnet sind, welche als Deckelplatte eines Kaffeevollautomaten dient. Die hinteren beiden Vorratsbehälter 2, 3 sind jeweils als zweiteilige Vorratsbehälter ausgebildet und dienen zur Aufnahme von Kaffeebohnen. Die beiden vorderen Vorratsbehälter 4, 5 sind in herkömmlicher Weise einteilig ausgebildet und dienen im Ausführungsbeispiel, ohne dass die Erfindung hierauf beschränkt wäre, zur Aufnahme von Schokoladenpulver.

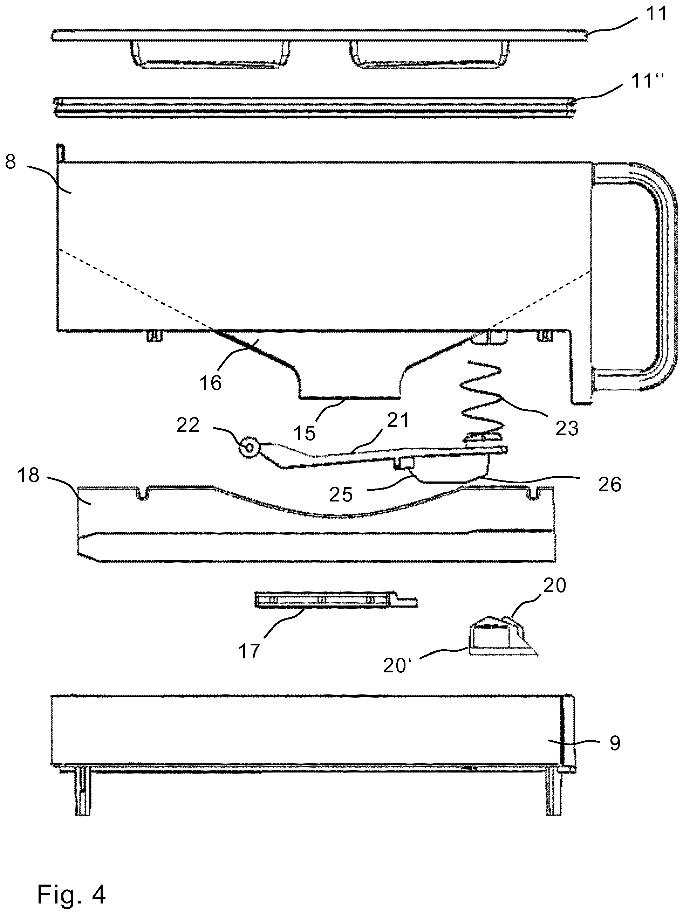

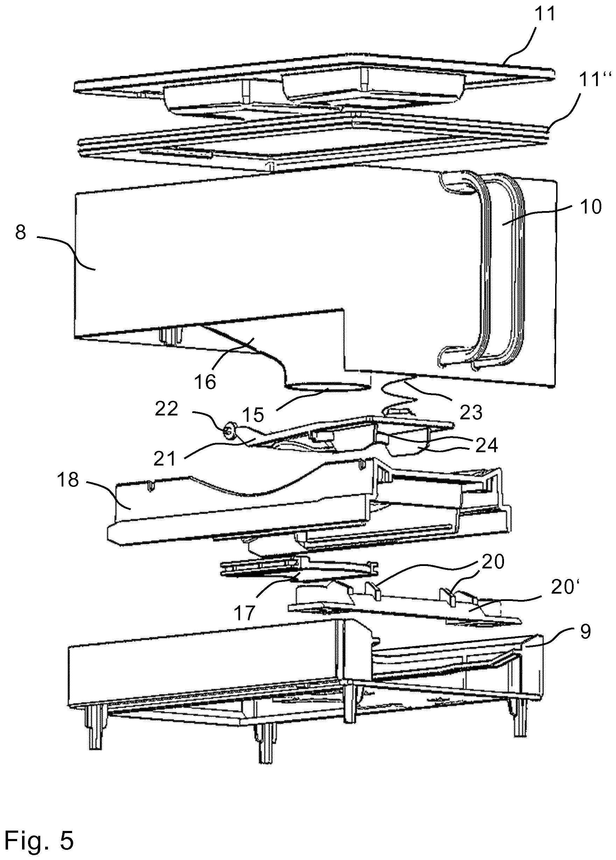

Von besonderem Interesse in Zusammenhang mit der vorliegenden Erfindung sind die beiden hinteren Vorratsbehälter 2, 3, die jeweils zweiteilig ausgebildet sind. Der hintere linke Vorratsbehälter 2 umfasst einen unteren Teilbehälter 7 und einen mit diesem über eine Schienenführung 9 verbundenen oberen Teilbehälter 8. Der obere Teilbehälter 8 ist hierbei in der Art einer Schublade von vorne in die Schienenführung 9 eingeschoben bzw. lässt sich nach vorne aus der Schienenführung 9 herausziehen. Hierzu weist er einen Handgriff 10 auf, an dem der Teilbehälter 8 ergriffen und nach vorne herausgezogen werden kann. Außerdem hat der Teilbehälter 8 einen Deckel 11 der mittels eines Schlosses 11' auf dem Teilbehälter 8 verriegelt werden kann. Der Deckel 11 ist außerdem mit einer Elastomerdichtung 11" (siehe Figuren 4 und 5) versehen.

Von dem hinteren rechten Vorratsbehälter 3 ist lediglich dessen unterer Teilbehälter 12 mit der darauf angeordneten Schienenführung 13 dargestellt. Der zugehörige obere Teilbehälter ist hingegen abgenommen. Im Gegensatz zu dem linken Vorratsbehälter 2 ist die Schienenführung 13 des rechten Vorratsbehälters hier beispielhaft und lediglich zur Veranschaulichung in entgegengesetzter Montagestellung montiert, so dass der zugehörige obere (nicht dargestellte) Teilbehälter von hinten in die Schienenführung 13 eingeschoben bzw. nach hinten aus dieser herausgezogen werden kann.

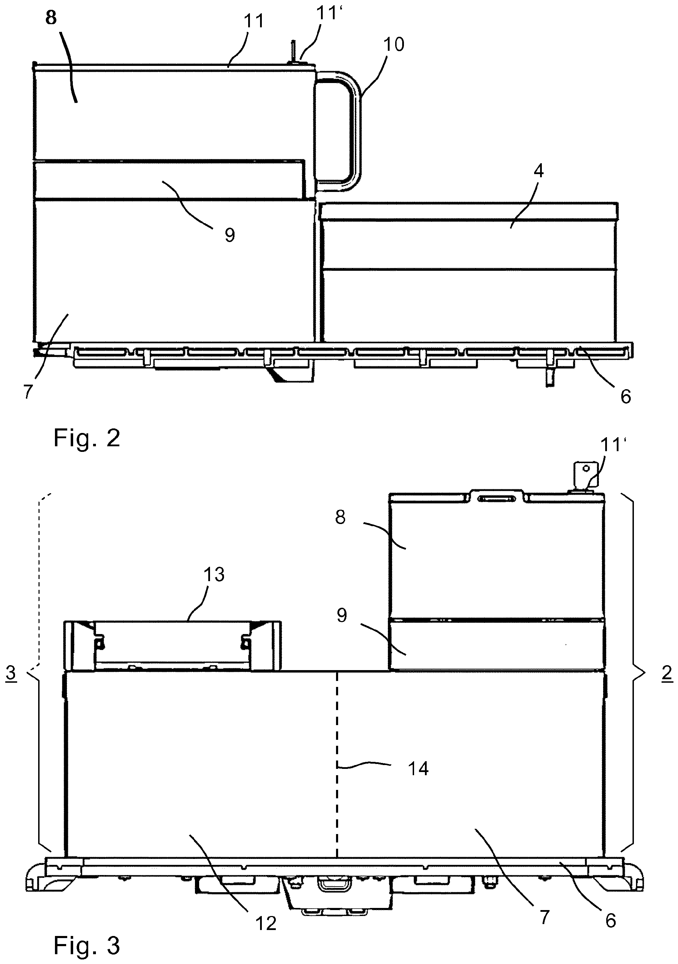

In den Figuren 2 und 3 sind eine Seitenansicht und eine rückwärtige Ansicht der Vorratsbehälteranordnung gezeigt. In Fig. 2 erkennt man, dass der obere Teilbehälter 8 an seinem Handgriff 10 nach rechts aus der Schienenführung 9 herausgezogen werden kann.

In Fig. 3 wird deutlich, dass die Schienenführung 9 für den Vorratsbehälter 2 in entgegengesetzter Richtung montiert ist, wie die entsprechende Schienenführung 13 des zweiten Vorratsbehälters 3. Während die in Fig. 3 rechte Schienenführung 9 so montiert ist, dass der zugehörige obere Teilbehälter 8 bzgl. des Kaffeevollautomaten nach vorne, also in die Zeichnungsebene hinein, herausgezogen wird, ist die entsprechende Schienenführung 13 des linken Vorratsbehälters 3 so montiert, dass der zugehörige, nicht gezeigte, obere Vorratsbehälter bzgl. des Kaffeevollautomaten nach hinten, also aus der Zeichnungsebene heraus ausgezogen wird. Die beiden unteren Teilbehälter 7, 12 sind hier als integrierte Einheit ausgeführt und intern durch eine gestrichelt dargestellte Trennwand 14 voneinander getrennt.

In der Explosionszeichnung in Fig. 4 ist der obere Teilbehälter 8 näher dargestellt. Er weist einen zu einer Verbindungsöffnung 15 sich trichterförmig nach unten hin verjüngenden Schrägboden 16 auf, der eine Schütte für darin befindliche Kaffeebohnen bildet. An der Verbindungsöffnung 15 ist eine Verschlussvorrichtung vorgesehen, welche beim Einschieben des oberen Teilbehälters 8 in seine zugehörige Schienenführung 9, die auf dem unteren Teilbehälter 7 verschraubt ist, selbsttätig öffnet bzw. beim Herausziehen des oberen Teilbehälters 8 schließt. Die Verschlussvorrichtung umfasst einen Schieber 17 und ein rahmenförmiges Führungsteil 18, in welchem der Schieber 17 in Längsrichtung des oberen Teilbehälters 8 verschieblich geführt wird. Zwei seitlich nach oben ragende Vorsprünge im Inneren der Schienenführung 9 (vgl. Bezugszeichen 19' in Fig. 1) sorgen dafür, dass der Schieber 17 beim Einführen des oberen Teilbehälters 8 in seine Schienenführung 9 in eine geöffnete Stellung verschoben wird, so dass die Verbindungsöffnung 15 freigegeben wird. Zusätzlich sind innerhalb der Schienenführung 9 federnde Rastnasen 20 (vgl. Bezugszeichen 20' in Fig. 1) vorgesehen, welche hinter dem geöffneten Schieber 17 einrasten und bei einem Herausziehen des oberen Teilbehälters 8 dafür sorgen, dass der Schieber 17 in seine Schließstellung zurückbewegt wird, in welcher er die Verbindungsöffnung 15 verdeckt. Die Rastnasen 20 sind im Ausführungsbeispiel an einem separaten Bauteil 20' angeordnet, welches federnd bzw. elastisch unterhalb bzw. an der Schienenführung 9 befestigt ist.

Zusätzlich ist ein Verriegelungsmechanismus vorgesehen, der dafür sorgt, dass der Schieber 17 in seiner geschlossenen Stellung gesichert wird, so dass er bei herausgezogenem Teilbehälter 8 nicht versehentlich aufgeschoben werden kann. Hierzu ist ein Verriegelungsteil 21 vorgesehen, welches in der Art einer Wippe mit einem Scharnier 22 am rahmenförmigen Führungsteil 18 angelenkt ist. Eine Schraubendruckfeder 23 sorgt für eine nach unten gerichtete Vorspannkraft und hält das Verriegelungsteil 21 bei geschlossenem Schieber 17 in seiner Verriegelungsstellung. Das Verriegelungsteil 21 hat eine nach unten weisende Falle 24 mit schrägen Führungsflächen bzw. Rampen 25, 26. Zum Öffnen des Schiebers 17 muss das Verriegelungsteil über die Rampe 25 entgegen der Federkraft der Schraubenfeder 23 nach oben gedrückt werden, so dass der Schieber 17 an der Falle 24 vorbeigeführt werden kann. In seiner geöffneten Stellung sorgt die Falle 24 über die Rampe 26 dafür, dass der Schieber 17 nur unter Überwindung der Federkraft der Feder 23 zurück in seine geschlossene Stellung geführt werden kann.

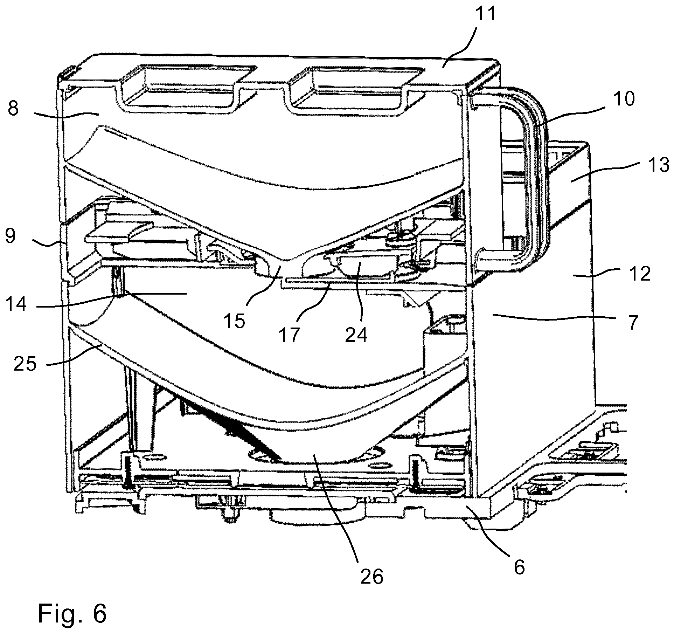

In der isometrischen Darstellung der Fig. 5 wird deutlich, dass das Verriegelungsteil 21 jeweils zwei seitlich der Verbindungsöffnung angeordnete Fallen 24 zur Sicherung des Schiebers 17 aufweist. In der teilgeschnittenen Darstellung in Fig. 6 ist der zweiteilige Vorratsbehälter 2 in zusammengefügtem Zustand dargestellt. Der Schieber 17 befindet sich in seiner rechten, geöffneten Stellung und gibt die Verbindungsöffnung 15 frei, so dass Kaffeebohnen aus dem oberen Teilbehälter 8 über die von dem Schrägboden 16 gebildete Schütte in den unteren Teilbehälter 7 rieseln können. Die hintere Verbindungswand 14 trennt den unteren Teilbehälter 7 des linken Vorratsbehälters 2 vom unteren Teilbehälter 12 des daneben befindlichen rechten Vorratsbehälters 3. Auch im unteren Teilbehälter 7 ist ein trichterförmiger Schrägboden 25 angeordnet, der in einer Auslassöffnung 26 mündet, durch die die Kaffeebohnen in ein darunter befindliches Mahlwerk des Kaffeevollautomaten fallen können.

Zum Befüllen der Vorratsbehälter 2, 3 kann somit der zugehörige obere Teilbehälter 8 aus seiner Schienenführung 9, 13 herausgezogen, befüllt und wieder eingeschoben werden, ohne dass der Betrieb des zugehörigen Kaffeevollautomaten beeinträchtigt oder unterbrochen wird. Die Schienenführungen 9, 13 lassen sich jeweils so montieren, dass der zugehörige obere Teilbehälter 8 entweder von vorne, also zur Verwendung in einem Kaffeevollautomaten im Servicebereich, oder nach hinten, beispielsweise zur Verwendung bei einem Kaffeevollautomaten im Selbstbedienungsbereich, herausgezogen werden kann. Somit ist eine unterbrechungsfreie und bequeme Befüllung des Kaffeevollautomaten mit Kaffeebohnen gewährleistet.

## Patentansprüche

1. Vorratsbehälteranordnung für ein Getränkezubereitungsgerät, zur Bevorratung und Zufuhr von einem oder mehreren festen Ausgangsstoffen für die Zubereitung von heißen oder kalten Getränken, die mindestens einen zweiteiligen Vorratsbehälter (2) mit einem unteren Teilbehälter (7) und einen abnehmbaren oberen Teilbehälter (8) aufweist, der auf dem unteren Teilbehälter (7) anordenbar ist, wobei der obere Teilbehälter (8) einen Boden (16) mit einer Verbindungsöffnung (15) aufweist und an der Verbindungsöffnung (15) eine Verschlussvorrichtung (17) angeordnet ist, **dadurch gekennzeichnet, dass** die Verschlussvorrichtung einen Schieber (17) aufweist, welcher bei einem Zusammenfügen von oberem und unterem Teilbehälter (7, 8) von einem am unteren Teilbehälter (7) angeordneten Vorsprung (19) in seine geöffnete Stellung geschoben wird und eine Verbindung zwischen oberem und unterem Teilbehälter (7, 8) freigibt.

2. Vorratsbehälteranordnung nach Anspruch 1, bei dem oberhalb des unteren Teilbehälters (7) eine Schienenführung (9) angebracht ist, in welche der obere Teilbehälter (8) zum Zusammenfügen eingeschoben wird.

3. Vorratsbehälteranordnung nach Anspruch 2, bei dem die Schienenführung (9) einen Endanschlag für den oberen Teilbehälter (8) aufweist und auf dem unteren Teilbehälter (7) in zwei Montagestellung montierbar ist, derart dass der obere Teilbehälter (8) entweder aus einer ersten oder aus einer der ersten entgegengesetzten zweiten Richtung in die Schienenführung (9) einschiebbar ist.

4. Vorratsbehälteranordnung nach einem der vorangehenden Ansprüche,.bei dem der Schieber (17) in einem geschlossenen Zustand von einem federbelasteten Riegel (21) gesichert ist und der Riegel eine schräge Rampe (25) aufweist, gegen die der Schieber (17) unter Überwindung einer Federkraft verschiebbar ist.

5. Vorratsbehälteranordnung nach Anspruch 4, bei dem der Schieber (17) bei einem Abnehmen des oberen Teilbehälters (8) vom unteren Teilbehälter (7) durch eine am unteren Teilbehälter (7) angeordnete Rastnase (20) in seine geschlossene Stellung geführt wird.

6. Vorratsbehälteranordnung nach einem der vorangehenden Ansprüche, bei dem der Boden (16) des oberen Teilbehälters (8) als ein zur Verbindungsöffnung hin geneigter Schrägboden ausgebildet ist, vorzugsweise sich zur Verbindungsöffnung (15) hin trichterförmig nach unten verjüngt.

7. Getränkezubereitungsgerät, insbesondere Kaffeevollautomat, mit einer Vorratsbehälteranordnung nach einem der vorangehenden Ansprüche.

8. Kaffeevollautomat nach Anspruch 7, bei dem der mindestens eine zweiteilige Vorratsbehälter (2) zur Aufnahme und Zufuhr von Kaffeebohnen dient und oberhalb eines Mahlwerkes des Kaffeevollautomaten angeordnet ist.

## Claims

1. Storage container arrangement for a beverage preparation device, for storing and supplying one or more solid starting substances for the preparation of hot or cold beverages, which arrangement has at least one two-part supply container (2) having a lower sub-container (7) and a removable upper sub-container (8) which is arrangeable on the lower sub-container (7), the upper sub-container (8) having a base (16) with a connection opening (15) and a closure device (17) being arranged at the connection opening (15), **characterised in that** the closure device has a slider (17) which, on assembly of the upper and lower sub-containers (7, 8), is pushed into its open position by a projection (19) arranged on the lower sub-container (7) and releases a connection between the upper and lower sub-containers (7, 8).

2. Storage container arrangement according to claim 1, wherein above the lower sub-container (7) there is mounted a rail guide (9) into which, for assembly, the upper container (8) is inserted.

3. Storage container arrangement according to claim 2, wherein the rail guide (9) has an end stop for the upper sub-container (8) and is mountable on the lower sub-container (7) in two mounting positions in such a way that the upper sub-container (8) is insertable into the rail guide (9) either from a first direction or from a second direction opposite to the first direction.

4. Storage container arrangement according to any one of the preceding claims, wherein the slider (17) is secured in a closed state by a spring-loaded locking bar (21) and the locking bar has a sloping ramp (25) relative to which the slider (17) is displaceable, overcoming a spring force .

5. Storage container arrangement according to claim 4, wherein, on removal of the upper sub-container (8) from the lower sub-container (7), the slider (17) is guided into its closed position by a locking lug (20) arranged on the lower sub-container (7).

6. Storage container arrangement according to any one of the preceding claims, wherein the base (16) of the upper sub-container (8) is in the form of a sloping base which is inclined towards the connection opening, and preferably tapers downwards funnel-like towards the connection opening (15).

7. Beverage preparation device, especially a fully automatic coffee machine, having a storage container arrangement according to any one of the preceding claims.

8. Fully automatic coffee machine according to claim 7, wherein the at least one two-part storage container (2) serves for receiving and supplying coffee beans and is arranged above a grinding mechanism of the fully automatic coffee machine.

## Revendications

1. Ensemble de récipients de stockage pour un appareil de préparation de boissons, destiné à stocker et apporter une ou plusieurs matières premières solides pour la préparation de boissons froides ou chaudes,
qui présente au moins un récipient de stockage (2) en deux parties avec un récipient partiel inférieur (7) et un récipient partiel supérieur amovible (8), qui est disposé sur le récipient partiel inférieur (7), sachant que le récipient partiel supérieur (8) présente un fond (16) pourvu d'une ouverture de communication (15) et qu'un dispositif de fermeture (17) est disposé sur l'ouverture de communication (15),
**caractérisé en ce que** le dispositif de fermeture présente un tiroir (17) qui, lors de l'assemblage du récipient partiel inférieur (7) et du récipient partiel supérieur (8), est poussé par une saillie (19) disposée sur le récipient partiel inférieur (7) dans sa position ouverte et libère une communication entre le récipient partiel inférieur (7) et le récipient partiel supérieur (8).

2. Ensemble de récipients de stockage selon la revendication 1, dans lequel une glissière de guidage (9), dans laquelle est enfilé le récipient partiel supérieur (8) lors de l'assemblage, est installée au-dessus du récipient partiel inférieur (7).

3. Ensemble de récipients de stockage selon la revendication 2, dans lequel la glissière de guidage (9) présente une butée de fin de course pour le récipient partiel supérieur (8) et peut être montée sur le récipient partiel inférieur (7) dans deux positions de montage, de telle sorte que le récipient partiel supérieur (8) peut être enfilé dans la glissière de guidage (9) depuis une première direction ou depuis une deuxième direction opposée à la première.

4. Ensemble de récipients de stockage selon l'une des revendications précédentes, dans lequel le tiroir (17) est assujetti dans un état fermé par un verrou (21) sollicité par ressort, et le verrou présente une rampe oblique (25) contre laquelle le tiroir (17) peut être déplacé en surmontant une force de ressort.

5. Ensemble de récipients de stockage selon la revendication 4, dans lequel, lorsque le récipient partiel supérieur (8) est retiré du récipient partiel inférieur (7), le tiroir (17) est guidé dans sa position fermée par un ergot de crantage (20) disposé sur le récipient partiel inférieur (7).

6. Ensemble de récipients de stockage selon l'une des revendications précédentes, dans lequel le fond (16) du récipient partiel supérieur (8) est réalisé sous la forme d'un fond oblique incliné en direction de l'ouverture de communication, de préférence se rétrécit en forme d'entonnoir vers le bas en direction de l'ouverture de communication (15).

7. Appareil de préparation de boissons, en particulier machine à café automatique, avec un ensemble de récipients de stockage selon l'une des revendications précédentes.

8. Machine à café automatique selon la revendication 7, dans laquelle le récipient de stockage au moins unique (2) en deux parties sert à recevoir et apporter des grains de café et est disposé au-dessus d'un moulin à café de la machine à café automatique.
